(19) Europäisches Patentamt
European Patent Office
Office européen des brevets

(11) **EP 4 510 073 A1**

(12) **EUROPEAN PATENT APPLICATION**

(43) Date of publication:
**19.02.2025 Bulletin 2025/08**

(21) Application number: **23196652.4**

(22) Date of filing: **11.09.2023**

(51) International Patent Classification (IPC):
**G06T 7/00** (2017.01)          **G06T 7/20** (2017.01)

(52) Cooperative Patent Classification (CPC):
**G06T 7/20; G06T 7/0012;** G06T 2207/10028;
G06T 2207/10048; G06T 2207/20104;
G06T 2207/30196

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.08.2023 US 202363533178 P**

(71) Applicant: **Koninklijke Philips N.V.
5656 AG Eindhoven (NL)**

(72) Inventor: **VAN ZON, Cornelis
5656 AG Eindhoven (NL)**

(74) Representative: **Philips Intellectual Property &
Standards
High Tech Campus 52
5656 AG Eindhoven (NL)**

(54) **MONITORING THE ACTIVITY OF A SUBJECT**

(57)     A mechanism for generating an activity or motion signal. Motion within a first region of interest of video data is monitored to generate a first measure of motion. Motion within at least one second, different region of interest is also monitored to generate at least one second measure of motion. Only when the second measure(s) of motion meet(s) one or more predetermined conditions is the first measure of motion used to define a value for the activity signal. Otherwise, the first measure of motion does not define the value for the activity signal.

FIG. 2

EP 4 510 073 A1

**Description**

FIELD OF THE INVENTION

The present invention relates to subject monitoring, and in particular to the field of subject activity monitoring.

BACKGROUND OF THE INVENTION

There is an increasing demand for autonomous or remote methods for monitoring a (medical) subject. One parameter of interest is a motion or activity of a subject. Different levels of activity can indicate different indications of subject restlessness or movement. This information is important for assessing the condition of the subject and monitoring for certain conditions. For instance, extremely low activity or motion increases the risk of pressure ulcers in a bed-bound subject. On the other hand, high levels of activity or motion indicates restlessness (e.g., during sleep) and/or potential delirium.

Actigraphy techniques aim to measure the degree of activity or motion of a subject. These measurements can be performed by analyzing video data produced by a camera viewing the subject to generate an activity signal that changes responsive to motion of the subject.

One example actigraphy technique makes use of motion vectors, which have a magnitude and direction, to produce a measure of motion or activity (e.g., a value for an activity signal) between frames of the video data. In particular, a region of interest can be defined within the video data, the region of interest containing (e.g., bounding) the representation of the subject and/or the support for the subject. Motion vectors are generated for each pixel in the region of interest. Algorithms for calculating motion vectors are well known in the art and are commonly referred to as motion estimators. One example of a motion estimator is a dense optical flow algorithm. A sum of the magnitudes of the motion vectors for the region of interest may define the measure of motion or activity between the frames. Each measure of motion or activity may define a value for the activity signal.

There is an ongoing desire to improve the accuracy and reliability of actigraphy techniques, and in particular, to avoid or reduce the number of false measures of motion in any activity signal.

SUMMARY OF THE INVENTION

The invention is defined by the claims.

According to examples in accordance with an aspect of the invention, there is provided a computer-implemented method for generating an activity signal responsive to an activity of a target subject.

The computer-implemented method comprises: obtaining video data comprising a sequence of image frames that each contain a representation of the target subject; identifying a first region of interest of the video data, the first region of interest containing the representation of the target subject across the sequence of image frames; identifying one or more second regions of interest, each second region of interest avoiding the representation of the target subject across the sequence of image frames; and performing an activity signal generation process on at least two images frames of the video data.

The activity signal generation process comprises: processing the first region of interest in the at least two image frames of the video data using a motion estimation method to determine a first measure of motion, representing a measure of motion in the first region of interest; processing each second region of interest in the at least two image frames of the video data using the motion estimation method to determine, for each second region of interest, a second measure of motion, each second measure of motion representing a motion in the corresponding second region of interest; and defining a value of the activity signal using the first measure of motion only when each second measure of motion meets one or more predetermined conditions.

The present invention proposes to effectively discard any measure of motion (for a region of interest containing the subject) if one or more other measures of motions for other regions of interest fail to meet one or more predetermined condition(s). For instance, if a measure of motion in any other region of interest exceeds some predetermined threshold, then this may indicate that the motion in the region of interest is not caused by the subject, such that the measure of motion for said region does not accurately represent a motion of the subject. Thus, the measure of motion may be discarded or disregarded.

The proposed approach increases the accuracy of the activity signal, and in particular, reduces a likelihood that a false indication of significant motion will be included in the activity signal when there is little or no (i.e., negligible) motion of the subject.

In some examples, the one or more predetermined conditions includes a condition that the second measure of motion indicates a level of motion in the corresponding second region of interest below a predetermined motion threshold for said second region of interest.

This approach uses a motion threshold to determine whether there is motion in areas outside the first region of interest, which are likely to be caused by other (non-target) subjects. By using the motion threshold, the effect of noise is reduced or mitigated and non-significant movements within the second region(s) of interest (e.g., small movements) can be effectively ignored.

The activity signal generation process may be iteratively repeated for different sets of at least two image frames. This advantageously creates measures of motion for each plurality of different sets of image frames across the video data, to provide an indication of activity throughout the video data (e.g., rather than a single indication of motion across the video data). This provides useful information for assessing or identifying motion of the individual or subject across a period of time.

The target subject may be supported by a subject support and each second region of interest may contain a representation of a zone adjacent to the subject support. This approach ensures that only movements in regions proximate or close to the first region of interest are used to determine whether or not a detected motion in the first region of interest are used to generate a value for the target signal. This avoids or mitigates a scenario in which a distant movement (e.g., of another subject in another subject support) masks a movement of the target subject.

In some examples, at least one of the one or more second regions of interest comprises a representation of a first zone to the side of the subject support. In some examples, at least one of the one or more second regions of interest comprises a representation of a second zone in front of the subject support. In some examples, at least one of the one or more second regions of interest comprises a representation of a third zone behind the subject support.

The activity signal generation process may comprise defining a value of the activity signal to be a default, null or zero value responsive to any of the second measures of motion failing to meet the one or more predetermined conditions. This approach avoids a probability or likelihood that movement of non-target subjects is erroneously indicated in the activity signal as a movement of the target subject. A false positive rate of the activity signal is therefore reduced.

The motion estimation method may comprise quantifying an inter-frame motion of any pixels in the corresponding region of interest across the at least two image frames. For instance, the motion estimation method may comprise: determining, for each pixel in the corresponding region of interest, a motion vector defining a movement of the pixel across the at least two image frames; and processing any determined motion vectors to quantify the inter-frame motion.

In some examples, the at least two image frames comprise only two image frames.

In some embodiments, the step of identifying the first region of interest comprises performing a segmentation algorithm on the video data to identify the first region of interest. This provides an automated or semi-automated approach to identifying the first region of interest.

The activity signal generation process may comprise sub-sampling each of at least two image frames to reduce a resolution of each image frame before determining the first and second measures of motion. This approach reduces or attenuates video noise in the video data, as well as significantly reducing a number of computations that need to be performed in order to generate the measure(s) of motion.

The computer-implemented method may further comprise outputting the activity signal to a further processing system for further processing; and/or controlling a display to provide a user-perceptible output that changes responsive to changes in the activity signal.

There is also proposed a computer program product comprising computer program code means which, when executed on a computing device having a processing system, cause the processing system to perform all of the steps of any herein described method. There is also proposed a computer-readable data carrier having stored thereon the computer program product.

There is also proposed a computer-readable (storage) medium comprising instructions which, when executed by a computer or processing system, cause the computer or processing system to carry out (the steps of) any herein disclosed method.

There is also proposed a processing system configured for generating an activity signal responsive to an activity of a target subject, the processing system being configured to: obtain video data comprising a sequence of image frames that each contain a representation of the target subject; identify a first region of interest of the video data, the first region of interest containing the representation of the target subject across the sequence of image frames; identify one or more second regions of interest, each second region of interest avoiding the representation of the target subject across the sequence of image frames; and perform an activity signal generation process on at least two images frames of the video data.

The activity signal generation process comprises: processing the first region of interest in the least two image frames of the video data using a motion estimation method to determine a first measure of motion, representing a measure of motion in the first region of interest; processing each second region of interest in the at least two image frames of the video data using the motion estimation method to determine, for each second region of interest, a second measure of motion, each second measure of motion representing a motion in the second region of interest; and defining a value of the activity signal using the first measure of motion only when each second measure of motion meets one or more predetermined conditions.

The skilled person would be readily capable of adapting the processing system to perform the function(s) of any herein disclosed method, and vice versa. The computer-program product may be similarly adapted.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a waveform illustrating an activity signal;
Fig. 2 is a flowchart illustrating a proposed method;
Fig. 3 is a flowchart illustrating a step for a proposed method;
Fig. 4 is a flowchart illustrating a variant to a proposed method;
Fig. 5 illustrates an image frame of video data;
Fig. 6 illustrates a processing system; and
Fig. 7 illustrates an activity monitoring system.

DETAILED DESCRIPTION OF EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for generating an activity or motion signal. Motion within a first region of interest of video data is monitored to generate a first measure of motion. Motion within at least one second, different region of interest is also monitored to generate at least one second measure of motion. Only when the second measure(s) of motion meet(s) one or more predetermined conditions is the first measure of motion used to define a value for the activity signal. Otherwise, the first measure of motion does not define the value for the activity signal.

The present disclosure relates to the generation of an activity signal using video data. The activity signal changes responsive to an activity or motion of a target subject. Any motion within a region of interest, which contains a representation of the target subject, is monitored across the video data to generate the activity signal (responsive to detected motion). This may comprise, for instance, iteratively generating a measure of motion within a region of interest between pairs of frames of the video data. Each measure of motion may form a data point of the activity signal. An alternative label for a measure of motion is an activity metric, as it represents a metric or measure of activity.

In the context of the present disclosure, a target subject is preferably a target medical subject, such as a patient in a hospital. More particularly, the target subject may be a patient or medical subject lying in or on a subject support (such as a bed, gurney or operating table). Monitoring for motion or activity of such subjects is particularly important for accurate medical monitoring.

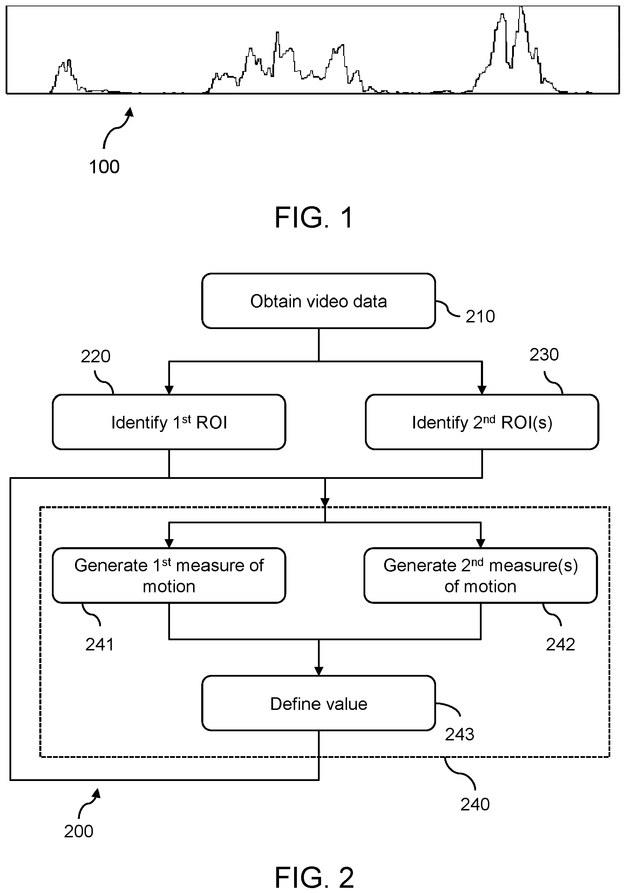

Fig. 1 is a waveform illustrating an example of an activity signal 100, for improved contextual understanding. The amplitude or magnitude of the activity signal increases responsive to an increase in the detected motion of the target subject. Thus, the greater the magnitude of the activity signal, the greater the detected amount or degree of motion of the target subject (and vice versa).

An accurate activity signal is particularly useful in the medical field, e.g., to monitor for bed mobility, sleep quality, pressure ulcer likelihood and/or delirium of a target subject. For instance, high levels of motion may indicate good bed mobility, poor sleep quality and/or the onset of delirium in a target subject (dependent upon the use-case scenario). On the contrary, low levels of motion may indicate an increased likelihood or risk of pressure ulcers.

The generation of an accurate activity signal is therefore important for improved clinical analysis and/or assessment of the target subject.

The present disclosure recognizes that existing motion estimation based approaches for generating an activity signal can suffer from significant interference if one or more other subjects (or other moving objects) are present in the vicinity of the target subject. In particular, such approaches are unable to distinguish between movement of the target subject in the region of interest and movement of any other subject in the region of interest.

The proposed approach overcomes this problem by monitoring for motion in one or more other regions of interest (which do not include a representation of the target subject). This relies upon the recognition that if there is motion in a region of interest that is close to the target subject, that motion can extend into the target subject's region of interest and thereby render motion measurements in the target region of interest unreliable, as the motion may relate to other region(s) of interest. Thus, any measure of motion or data value for the activity signal may be nullified, zeroed or otherwise set to a default value.

Fig. 2 is a flowchart illustrating a method 200 according to a proposed embodiment.

The method 200 comprises a step 210 of obtaining video data comprising a sequence of image frames that each contain a representation of the target subject. The sequence of image frames forms a temporal sequence, in that image frames later in the sequence represent a later point in time than image frames earlier in the sequence. The video data may, for instance, comprise visible-light video data, but other forms of video data are also suitable (e.g., depth video data, infrared or thermal video data and so on).

The video data may be obtained, for example, from a camera that captures the video data and/or a memory or storage unit that stores video data (e.g., captured by a camera).

The method 200 also comprises a step 220 of identifying a first region of interest (first ROI) of the video data. The first region of interest contains the representation of the target subject across the sequence of image frames. In some examples, the first region of interest contains a representation of the target subject and a portion of a subject support that supports the target subject.

A wide variety of approaches for performing step 220 could be used. In some examples, step 220 is performed responsive to a user input that identifies the first region of interest, such that at least the first region of interest may be user-defined.

As another example, step 220 could be performed using an image segmentation technique, such a suitably trained machine-learning algorithm, to detect the target subject. The image segmentation technique may, for instance, identify a bounding box that contains or bounds the representation of the target subject throughout the video data. A wide variety of suitable segmentation techniques are known, such as those set out in Minaee, Shervin, et al. "Image segmentation using deep learning: A survey." IEEE transactions on pattern analysis and machine intelligence 44.7 (2021): 3523-3542 or Cheng, Heng-Da, et al. "Color image segmentation: advances and prospects." Pattern recognition 34.12 (2001): 2259-2281. Other examples will be apparent to the skilled person.

The first region of interest may be defined as a rectangle (e.g., a square or a trapezoid) that, when overlaying the video data, contains or bounds the representation of the target subject therein.

The method 200 also comprises a step 230 of identifying one or more second regions of interest (second ROI(s)) of the video data. Each second region of interest avoids the representation of the target subject across the sequence of image frames. It is possible for a second ROI to overlap a first ROI.

In some examples, step 230 is (at least partially) performed responsive to a user input that identifies at least one second region of interest, such that at least one second region of interest may be user-defined.

In some examples, step 230 comprises defining a region of the video data that does not contain the first region of interest as the second region of interest. Thus, the second region of interest may comprise all portions of the video data that are not contained in the first region of interest.

In some examples, step 230 comprises defining setting a plurality of second ROIs having a size and/or location dependent upon the first ROI. In particular, The second ROIs could be set automatically, with a pre-defined size and location relative to the first ROI. For instance, each second ROI may be defined as starting from a side of the first ROI and extending away therefrom. If the first ROI has four sides, a corresponding number of second ROIs may be defined therefrom.

Each second region of interest may be defined as a rectangle (e.g., a square or a trapezoid) that, when overlaying the video data, does not contain or bound the representation of the target subject therein. In preferred examples, each second region of interest, when overlaying the video data, will bound or contain the representation of any movement or motion in regions adjacent to the target subject (e.g., the representation of any other moving object in regions adjacent or proximate to the target subject).

The method 200 further comprises performing an activity signal generation process 240 on at least two image frames of the video data, e.g., a pair of image frames.

The activity signal generation process comprises a step 241 of processing the first region of interest in the least two image frames of the video data using a motion estimation method to determine a first measure of motion, representing a measure of motion in the first region of interest.

The activity signal generation process also comprises a step 242 of processing each second region of interest in the at least two image frames of the video data using the motion estimation method to determine, for each second region of interest, a second measure of motion, each second measure of motion representing a motion in the corresponding second region of interest.

One example motion estimation method aims to quantify an inter-frame motion of any pixels in the corresponding region of interest across the at least two image frames. For instance, the motion estimation method may determine, for each pixel in the corresponding region of interest, a motion vector defining a movement of the pixel across the at least two image frames; and processing any determined motion vectors to quantify the inter-frame motion. The quantified inter-frame motion may represent or be the measure of motion for the corresponding region of interest.

The generating the motion vector for each pixel in the corresponding region of interest may be done on a region by region basis. Thus, each region of interest may be separately processed to individually generate the motion vector for each pixel in that region of interest. Alternatively, the (pixels of the) union of all regions of interest may be processed at a same time to generate the motion vector for each pixel in the union of the regions of interest. The quantified inter-frame motion (i.e., the measure of motion) may then be determined for each individual region of interest using the motion vectors of that region of interest.

Approaches for determining motion vectors for pixels are well established in the art, and are commonly known as motion estimation techniques. A suitable introduction can be found in JW Woods (2012), "Motion Estimation and Motion Compensation," in Multidimensional Signal, Image and Video Processing and Coding, 2nd edition, chapter 11.2, pp. 421-433, Elsevier, ISBN 978-0-12-381420-3, 2012.

In some examples, processing the determined motion vectors may comprise summing or averaging the determined motion vectors. The processing may optionally comprise discarding outliers of the determined motion vectors, e.g., to reduce noise or the like.

In some examples, the quantified inter-frame motion for a region of interest is normalized to the size of the region of interest. Thus, a measure of the size (e.g., area or perimeter) of the region of interest may be used to normalize the measure of motion. This may comprise dividing the determined measure of motion for each region of interest by a measure of the size of the corresponding region of interest.

One example motion estimation method thereby makes use of motion vectors to generate a measure of motion (e.g., which quantifies inter-frame motion) for the corresponding region of interest to which the motion estimation method is applied.

In particular, in one embodiment, a measure of motion $am_n$ (for any given region of interest n) is determined using the following equation:

$$am_n = \frac{1}{w_n h_n} \sum_{i=0}^{w_n-1} \sum_{j=0}^{h_n-1} \sqrt{mv_{n,ij,x}^2 + mv_{n,ij,y}^2} \qquad (1)$$

where n identifies the particular region of interest, $w_n$ is a width of the region of interest n (e.g., in pixels), $h_n$ is a height of the region of interest n, $mv_{n,ij,x}$ is the x-component of a motion vector for a pixel (i, j) in the region of interest n; and $mv_{n,ij,y}$ is the y-component of motion vector for a pixel (i, j) in the region of interest n.

For the purposes of equation (1), it is assumed that the region of interest is a rectangular (e.g., oblong or square) region of interest.

An alternative approach to determining a measure of motion $am_n$ uses the following equation:

$$am_n = \frac{1}{w_n h_n} \sum_{i=0}^{w_n-1} \sum_{j=0}^{h_n-1} |mv_{n,ij,x}| + |mv_{n,ij,y}| \qquad (2)$$

Equation (2) effectively proposes to sum the magnitudes of the motion vectors in the region of interest n, normalized by the ROI size. Equation (2) requires less processing resource to perform than equation (1), which may be particularly advantageous in low resource environments.

The process 240 further comprises a step 243 of defining a value of the activity signal using the first measure of motion only when each second measure of motion meets one or more predetermined conditions.

Thus, the first measure of motion is only used to define the value of the activity signal when the second measure of motion meets one or more predetermined conditions. Otherwise, the first measure of motion is not used to define the value of the activity signal, e.g., the value may be nulled or set to a default value.

This approach avoids the activity signal erroneously indicating a motion or activity of the target subject when there is a probability or likelihood that the detected motion is caused by or resulting from another subject (who will be partly located outside the region of interest). It has also been recognized that activity in the second regions of interest are most likely to be caused by humans, meaning that the medical subject in first region is being tended to, and therefore generation of an alarm is not required.

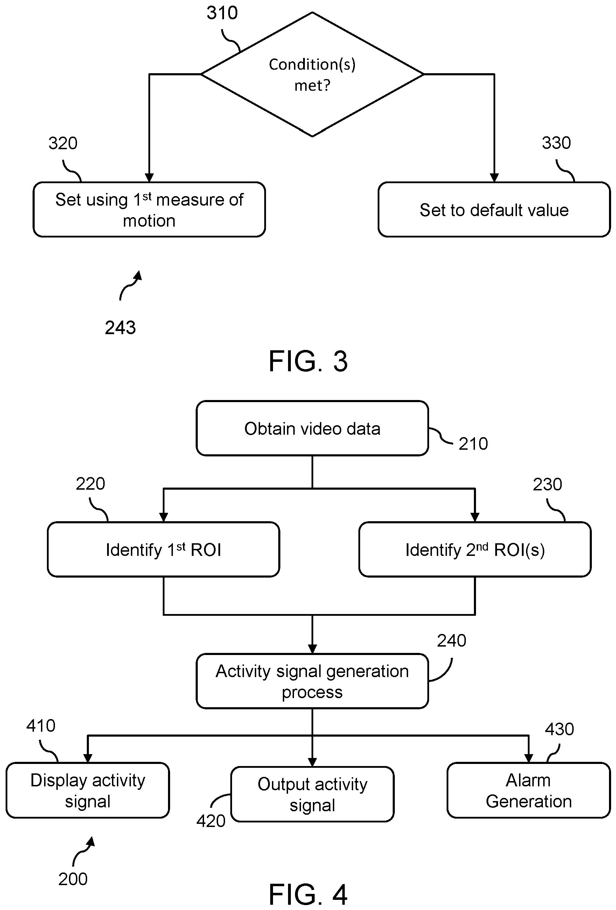

Fig. 3 illustrates one example approach to performing step 243.

The step 243 may comprise a determination step 310 of determining whether or not the one or more predetermined conditions (for the second measure of motion(s)) are met.

Responsive to a positive determination in step 310, a step 320 is performed of setting or defining the value of the activity signal using the first measure of motion. For instance, step 320 may comprise setting the value of the activity signal to be equal to the first measure of motion.

Responsive to a negative determination in step 310, a step 330 is performed of setting or defining the value of the activity signal to a default value, e.g., nulling or setting the value to zero.

The one or more predetermined condition may include a condition that the second measure of motion indicates a level of motion in the corresponding second region of interest below (or equal to) a predetermined motion threshold for said second region of interest. This approach will effectively check whether or not any of the second regions of interest indicate a motion (beyond a certain threshold). Responsive to a detected motion, the condition(s) are not met, such that the value of the activity signal is not set using the first measure of motion.

In particular, the one or more predetermined condition may include a condition that the second measure of motion is less than or equal to a predetermined threshold measure.

The value of the predetermined motion threshold or predetermined threshold measure may be defined, for instance, empirically or by a user. In some examples, the value of the predetermined threshold measure is defined as a predetermined percentage (e.g., 10% or 20%) of the maximum possible value for the measure of motion.

The predetermined motion threshold may be set or defined differently for different second regions of interest. Thus, each second region of interest may have a different or otherwise individually defined predetermined motion threshold. This could, for example, allow consideration of circumstances in which the target subject causes some activity or motion in the second region(s) of interest (e.g., extending an arm or leg outside the region of interest).

The above-described approach(es) can be mathematically represented by the following equation:

$$am_1 \rightarrow \begin{cases} am_1, am_r \leq T_r \ \forall \ r \in [1, N] \\ 0, \exists r \in [1, N] \ | \ am_r > T_r \end{cases} \qquad (3)$$

where $am_1$ is the measure of motion for the first region of interest, $am_r$ represents a measure of interest for the r-th second region of interest, $T_r$ represents a predetermined motion threshold (or predetermined threshold measure) for the r-th second region of interest; N represents the number of second regions of interest.

In words, equation (3) indicates that the measure of motion (e.g., activity metric) for the first region of interest is replaced by zero if any measure of motion from any of the second regions of interest exceeds a threshold $T_r$. $T_r$ may be determined empirically for each second region of interest. The threshold $T_r$ may be the same for all regions of interest for improved ease of computation. Instead of zero, any other replacement value (or string, e.g., "n/a") could be used.

The value of $am_1$ after executing equation (3) may represent or act as the value of the activity signal produced by one iteration of the activity signal generation process.

Turning back to Fig. 2, the activity signal generation process 240 may be interactively repeated for different sets or pairs of image frames. In particular, each set of image frames may be a pair of neighboring pairs of image frames within the sequence of image frames forming video data, wherein each pair of image frames processed in a later iteration are later in the sequence of image frames than a pair of image frames processed in an earlier iteration. This approach effectively causes an iterative update moving through the video data.

The activity signal may be iteratively updated with each iterative repetition of the activity signal generation process. Thus, each repetition of the activity signal generation process may add or append an additional value to the activity signal.

Of course, it will be appreciated that the video data (originally obtained in step 210) may be iteratively updated as the activity signal generation process 240 is iteratively repeated. This can allow, for instance, for live or immediate feedback on any changes in the motion or activity of the target subject being monitored with the video data.

In some examples, the activity signal generation process comprises sub-sampling each of at least two image frames to reduce a resolution of each image frame before determining the first and second measures of motion. Sub-sampling may, for instance, comprise calculating the average of nonoverlapping blocks of MxP pixels in each image frame. This can significantly reduce the number of computations for determining the measure(s) of motion as well as reducing video noise prior to calculating the measure(s) of motion. M and P may be any suitable integer value (of which at least one of M and P is greater than 1) In some examples, M = P. Good results have been identified when M = P = 4. Of course, where necessary, (e.g., zero) padding of the image frames may be performed to ensure the image frames are an appropriate resolution for performing sub-sampling for blocks of size MxP.

Fig. 4 illustrates a further variant to the computer-implemented method 200, illustrating optional additional steps that may be performed.

In particular, the method 200 may comprise a step 410 of displaying the activity signal. Step 410 may comprise, for instance, controlling a display or screen to provide a user-perceptible output of the activity signal. Approaches for controlling a display to perform such a task will be well known to the skilled person, making use of well established display control protocols.

The method 200 may comprise a step 420 of outputting the activity signal. In particular, step 420 may comprise outputting the activity signal to a further processing system configured to process and/or analyze the activity signal. The further processing system may, for instance, be able to derive or predict one or more further properties of the target subject responsive to the activity signal - such as a level of motion, a risk of pressure ulcers, a risk of delirium, a sleep quality metric and so on.

The method 200 may comprise a step 430 of processing the activity signal to determine whether or not to generate one or more (user-perceptible) alarms. This may comprise determining whether or not the (value(s)) of the activity signal have breached a predetermined alarm threshold. For instance, breaching the threshold may trigger the generation of an alarm, whereas failure to breach the threshold may not trigger the generation of an alarm. Responsive to determining to generate an alarm, step 430 may comprise controlling an output device (e.g., a screen or speaker) to generate a user-perceptible alarm.

Step 430 may advantageously generate an alarm when a movement, motion or activity breaches some predetermined threshold, e.g., to alert to a movement of the target subject. This can advantageously alert to movement of the target subject.

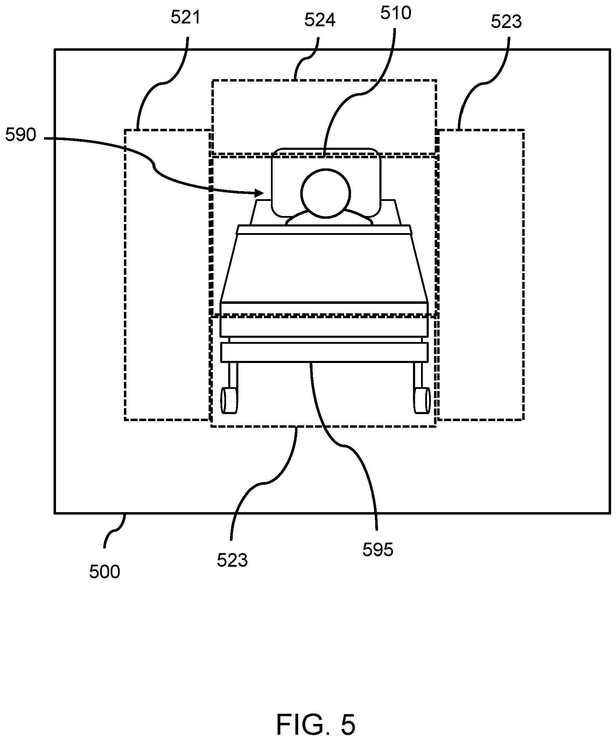

Fig. 5 conceptually illustrates an example image frame 500, for improved understanding of a region of interest. The image frame 500 contains a representation of a target subject 590, here: an individual or medical subject lying on a subject support 595 (here: a bed). Alternative examples of a subject support are well known to the skilled person, e.g., a gurney, operating table, or other similar support.

A first region of interest 510 is a region that bounds or comprises the representation of the target subject. In particular, the first region of interest may be a region in which the representation of the target subject is expected to be located and/or expected to move within (e.g., during normal or conventional motion of the target subject). The first region of interest may, for instance, be identified by a user input or automatically identified.

Fig. 5 illustrates a plurality of second regions of interest 521, 522, 523, 524, any one or more of which may be employed in various embodiments. The location of the second regions of interest may be defined by a user or operator (e.g., viewing a feed of the video data), and/or responsive to a location and/or size of the first region of interest.

In some examples, each second region of interest contains a representation of a zone adjacent to the subject support 595.

At least one of the one or more second regions of interest 521, 522 may comprise a representation of a first zone to the side of the subject support. For instance, one second region of interest 521 may lie on one side of the subject support, whereas another second region of interest 522 may lie on another side of the subject support. It is not essential for both of these second regions of interest 521, 522 to be provided if, for instance, the subject support is against a wall or other blocking element.

In some examples, at least one of the one or more second regions of interest 523 comprises a representation of a second zone in front of the subject support. This can, for instance, be a zone including a foot end of the subject support and/or an area beyond the foot end of the subject support.

In some examples, at least one of the one or more second regions of interest 524 comprises a representation of a third zone behind the subject support. Thus, such a second region of interest may include a zone beyond a head end of the subject support. This region of interest 524 may, for instance, be omitted if the (head end of the) subject support is positioned against a wall or other blocking surface.

The skilled person would be readily capable of developing a processing system for carrying out any herein described method. Thus, each step of the flow chart may represent a different action performed by a processing system, and may be performed by a respective module of the processing system.

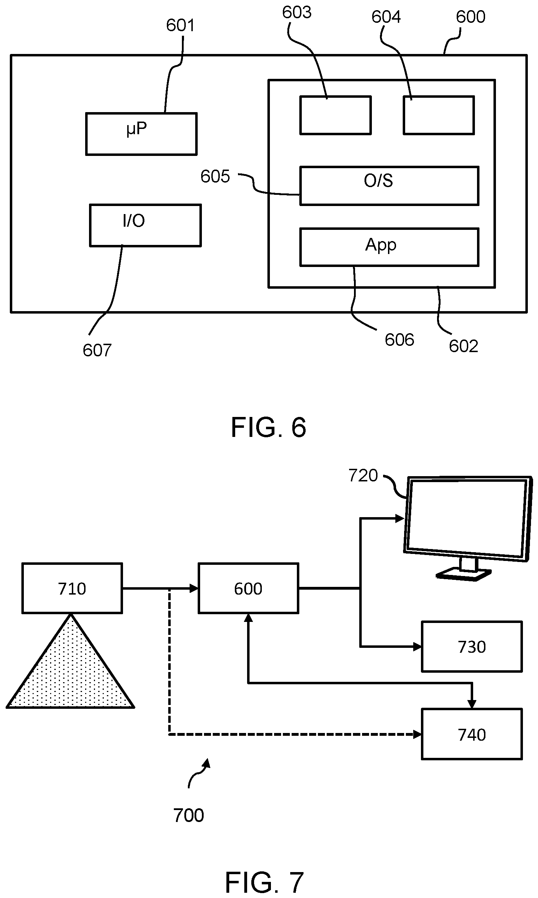

Fig. 6 illustrates an example of a processing system 600 within which one or more parts of an embodiment may be employed. Various operations discussed above may utilize the capabilities of the processing system 600. For example, one or more parts of a system for generating an activity signal may be incorporated in any element, module, application, and/or component discussed herein. In this regard, it is to be understood that system's functional blocks can run on a single processing system or may be distributed over several processing systems and locations (e.g., connected via internet).

The processing system 600 includes, but is not limited to, PCs, workstations, laptops, PDAs, palm devices, servers, storages, and the like. Generally, in terms of hardware architecture, the processing system 600 may include one or more processors 601, memory 602, and one or more I/O devices 607 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 601 is a hardware device for executing software that can be stored in the memory 602. The processor 601 can be virtually any custom made or commercially available processor, a central processing unit (CPU), a digital signal processor (DSP), or an auxiliary processor among several processors associated with the processing system 600, and the processor 601 may be a semiconductor-based microprocessor (in the form of a microchip).

The memory 602 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 602 may incorporate electronic, magnetic, optical, and/or other types of storage media. Note that the memory 602 can have a distributed architecture, where various components are situated remote from one another, but can be accessed by the processor 601.

The software in the memory 602 may include one or more separate programs, each of which comprises an ordered listing of executable instructions for implementing logical functions. The software in the memory 602 includes a suitable operating system (O/S) 605, compiler 604, source code 603, and one or more applications 606 in accordance with exemplary embodiments. As illustrated, the application 606 comprises numerous functional components for implementing the features and operations of the exemplary embodiments. The application 606 of the processing system 600 may represent various applications, computational units, logic, functional units, processes, operations, virtual entities, and/or modules in accordance with exemplary embodiments, but the application 606 is not meant to be a limitation.

The operating system 605 controls the execution of other computer programs, and provides scheduling, input-output control, file and data management, memory management, and communication control and related services. It is contemplated by the inventors that the application 606 for implementing exemplary embodiments may be applicable on all commercially available operating systems.

Application 606 may be a source program, executable program (object code), script, or any other entity comprising a set of instructions to be performed. When a source program, then the program is usually translated via a compiler (such as the compiler 604), assembler, interpreter, or the like, which may or may not be included within the memory 602, so as to operate properly in connection with the O/S 605. Furthermore, the application 606 can be written as an object oriented programming language, which has classes of data and methods, or a procedural programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 607 may include input devices such as, for example but not limited to, a mouse, keyboard, scanner, microphone, camera, etc. Furthermore, the I/O devices 607 may also include output devices, for example but not limited to a printer, display, etc. Finally, the I/O devices 607 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 607 also include components for communicating over various networks, such as the Internet or intranet.

If the processing system 600 is a PC, workstation, intelligent device or the like, the software in the memory 602 may further include a basic input output system (BIOS) (omitted for simplicity). The BIOS is a set of essential software routines that initialize and test hardware at startup, start the O/S 605, and support the transfer of data among the hardware devices. The BIOS is stored in some type of read-only-memory, such as ROM, PROM, EPROM, EEPROM or the like, so that the BIOS can be executed when the processing system 600 is activated.

When the processing system 600 is in operation, the processor 601 is configured to execute software stored within the memory 602, to communicate data to and from the memory 602, and to generally control operations of the processing system 600 pursuant to the software. The application 606 and the O/S 605 are read, in whole or in part, by the processor 601, perhaps buffered within the processor 601, and then executed.

When the application 606 is implemented in software it should be noted that the application 606 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 606 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

For the sake of completeness, it is noted that the processing system may comprise one or more fixed-function (e.g., an ASIC) or application-programmable circuitry (e.g., FPGAs) configured to perform one or more functions of the processing system, e.g., to carry out one or more steps of the proposed method. A processing system may comprise a combination of such circuitry and general purpose circuitry.

Fig. 7 illustrates an activity monitoring system 700 according to an embodiment. The activity monitoring system 700 comprises a processing system 600, which may be embodied as previously described, and a camera 710. The activity monitoring system may further comprise a user interface 720 and/or a further processing system 730.

The processing system 600, itself an embodiment of the invention, is configured to perform any previously described method for generating an activity signal responsive to an activity of a target subject. It will be appreciated that the processing system 600 may form a module or sub-processing routine of a larger processing system.

Thus, the processing system 600 is configured to: obtain video data comprising a sequence of image frames that each contain a representation of the target subject; identify a first region of interest of the video data, the first region of interest containing the representation of the target subject across the sequence of image frames; identify one or more second regions of interest, each second region of interest avoiding the representation of the target subject across the sequence of image frames; and perform an activity signal generation process on at least two images frames of the video data.

The activity signal generation process comprises: processing the first region of interest in the least two image frames of the video data using a motion estimation method to determine a first measure of motion, representing a measure of motion in the first region of interest; processing each second region of interest in the at least two image frames of the video data using the motion estimation method to determine, for each second region of interest, a second measure of motion, each second measure of motion representing a motion in the second region of interest; and defining a value of the activity signal using the first measure of motion only when each second measure of motion meets one or more predetermined conditions.

The camera 710 is configured to capture the video data of the target subject. The camera may, for example, operate in the visible light spectrum so as to capture the video data. However, the camera 710 may operate in alternative spectrums (e.g., infrared) or may be configured to capture depth information to form the video data, e.g., operate as a time-of-flight camera.

The video data generated by the camera 710 may be passed directly to the processing system 600 for processing. The processing system may be directly (e.g., via USB) or indirectly (e.g., via Ethernet or WiFi) connected to the camera 710. Alternatively, the video data may be stored in a storage unit or memory 740, from which it can be retrieved by the processing system 600.

The processing system 600 may be configured to control the user interface 720 (e.g., a display or screen) to provide a user-perceptible output that changes responsive to changes in the activity signal. The user-perceptible output may be a visible user-perceptible output.

The processing system 600 may be configured to output the activity signal to the further processing system 730 for further processing. The further processing system 730 may, for instance, process the activity signal to monitor and/or track one or more characteristics or properties of the target subject, e.g., a risk of pressure ulcers, sleep quality and so on. In some examples, the activity signal acts as one of a plurality of inputs for a process performed by the further processing system 730 to determine one or more characteristics of the target subject. Approaches will be apparent to the appropriately skilled person.

The processing system 600 may be configured to store the activity signal in a storage unit or memory 740. For instance, the activity signal may be stored in an electronic medical record for the target subject or a database of activity signals (e.g., for data mining or the like).

Variations to the disclosed embodiments can be understood and effected by those skilled in the art in practicing the claimed invention, from a study of the drawings, the disclosure and the appended claims. The mere fact that certain measures are recited in mutually different dependent claims does not indicate that a combination of these measures cannot be used to advantage.

In the claims, the word "comprising" does not exclude other elements or steps, and the indefinite article "a" or "an" does not exclude a plurality. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

A single processor or other unit may fulfill the functions of several items recited in the claims. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A computer-implemented method for generating an activity signal (100) responsive to an activity of a target subject (590), the computer-implemented method comprising:

obtaining (210) video data comprising a sequence of image frames that each contain a representation of the target subject;

identifying (220) a first region of interest (510) of the video data, the first region of interest containing the representation of the target subject across the sequence of image frames;

identifying (230) one or more second regions of interest (521, 522, 523, 524), each second region of interest avoiding the representation of the target subject across the sequence of image frames; and

performing an activity signal generation process (240) on at least two images frames of the video data, the activity signal generation process comprising:

processing (241) the first region of interest in the least two image frames of the video data using a motion estimation method to determine a first measure of motion, representing a measure of motion in the first region of interest;

processing (242) each second region of interest in the at least two image frames of the video data using the motion estimation method to determine, for each second region of interest, a second measure of motion, each second measure of motion representing a motion in the corresponding second region of interest; and

defining (243) a value of the activity signal using the first measure of motion only when each second measure of motion meets one or more predetermined conditions.

2.  The computer-implemented method of claim 1, wherein the one or more predetermined conditions includes a condition that the second measure of motion indicates a level of motion in the corresponding second region of interest below a predetermined motion threshold for said second region of interest.

3.  The computer-implemented method of any of claims 1 or 2, wherein the activity signal generation process is iteratively repeated for different sets of at least two image frames.

4.  The computer-implemented method of any of claims 1 to 3, wherein the target subject is supported by a subject support and each second region of interest contains a representation of a zone adjacent to the subject support.

5.  The computer-implemented method of claim 4, wherein at least one of the one or more second regions of interest comprises a representation of a first zone to the side of the subject support.

6.  The computer-implemented method of claim 4 or 5, wherein at least one of the one or more second regions of interest comprises a representation of a second zone in front of the subject support.

7.  The computer-implemented method of any of claims 4 to 6, wherein at least one of the one or more second regions of interest comprises a representation of a third zone behind the subject support.

8.  The computer-implemented method of any of claims 1 to 7, wherein the activity signal generation process comprises defining a value of the activity signal to be a default, null or zero value responsive to any of the second measures of motion failing to meet the one or more predetermined conditions.

9.  The computer-implemented method of any of claims 1 to 8, wherein the motion estimation method comprises quantifying an inter-frame motion of any pixels in the corresponding region of interest across the at least two image frames.

10. The computer-implemented method of claim 9, wherein the motion estimation method comprises:

determining, for each pixel in the corresponding region of interest, a motion vector defining a movement of the pixel across the at least two image frames; and

processing any determined motion vectors to quantify the inter-frame motion.

11. The computer-implemented method of any of claims 1 to 10, wherein the at least two image frames comprise only two image frames.

12. The computer-implemented method of any of claims 1 to 11, wherein the activity signal generation process comprises sub-sampling each of at least two image frames to reduce a resolution of each image frame before determining the first and second measures of motion.

13. The computer-implemented method of any of claims 1 to 12, further comprising:

outputting (420) the activity signal to a further processing system for further processing; and/or
controlling (410) a display to provide a user-perceptible output that changes responsive to changes in the activity signal.

14. A computer program product comprising computer program code means which, when executed on a computing device having a processing system, cause the processing system to perform all of the steps of the method according to any of claims 1 to 13.

15. A processing system (600) configured for generating an activity signal (100) responsive to an activity of a target subject (590), the processing system being configured to:

obtain (210) video data comprising a sequence of image frames that each contain a representation of the target subject;
identify (220) a first region of interest (510) of the video data, the first region of interest containing the representation of the target subject across the sequence of image frames;
identify (230) one or more second regions of interest (521, 522, 523, 524), each second region of interest avoiding the representation of the target subject across the sequence of image frames; and
perform an activity signal generation process (240) on at least two images frames of the video data, the activity signal generation process comprising:

processing (241) the first region of interest in the least two image frames of the video data using a motion estimation method to determine a first measure of motion, representing a measure of motion in the first region of interest;
processing (242) each second region of interest in the at least two image frames of the video data using the motion estimation method to determine, for each second region of interest, a second measure of motion, each second measure of motion representing a motion in the second region of interest; and
defining (243) a value of the activity signal using the first measure of motion only when each second measure of motion meets one or more predetermined conditions.

**FIG. 1**

**FIG. 2**

310

Condition(s)
met?

320

Set using 1ˢᵗ measure of
motion

330

Set to default value

243

## FIG. 3

Obtain video data

210

220

Identify 1ˢᵗ ROI

230

Identify 2ⁿᵈ ROI(s)

240

Activity signal generation
process

410

Display activity
signal

Output activity
signal

420

Alarm
Generation

430

200

## FIG. 4

FIG. 5

FIG. 6

FIG. 7

**Europäisches Patentamt**
**European Patent Office**
**Office européen des brevets**

# EUROPEAN SEARCH REPORT

**Application Number**

EP 23 19 6652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NZ 534 482 A (CANTERPRISE LTD) 31 May 2007 (2007-05-31) * the whole document * | 1-15 | INV. G06T7/00 G06T7/20 |
| A | US 2016/125620 A1 (HEINRICH ADRIENNE [NL] ET AL) 5 May 2016 (2016-05-05) * abstract * * paragraphs [0032], [0083], [0094] * | 10 | |

TECHNICAL FIELDS
SEARCHED        (IPC)

G06T
A61B

The present search report has been drawn up for all claims

| Place of search | Date of completion of the search | Examiner |
|---|---|---|
| Munich | 20 February 2024 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 23 19 6652

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2024

| Patent document cited in search report | | Publication date | Patent family member(s) | | Publication date |
|---|---|---|---|---|---|
| NZ 534482 | A | 31-05-2007 | NONE | | |
| US 2016125620 | A1 | 05-05-2016 | CN | 107072548 A | 18-08-2017 |
| | | | EP | 3214996 A1 | 13-09-2017 |
| | | | JP | 6588978 B2 | 09-10-2019 |
| | | | JP | 2017536880 A | 14-12-2017 |
| | | | US | 2016125620 A1 | 05-05-2016 |
| | | | WO | 2016071314 A1 | 12-05-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MINAEE, SHERVIN et al.** Image segmentation using deep learning: A survey. *IEEE transactions on pattern analysis and machine intelligence*, 2021, vol. 44 (7), 3523-3542
- **CHENG, HENG-DA et al.** Color image segmentation: advances and prospects. *Pattern recognition*, 2001, vol. 34 (12), 2259-2281
- Motion Estimation and Motion Compensation. **JW WOODS**. Multidimensional Signal, Image and Video Processing and Coding. Elsevier, 2012, 421-433